# EUROPEAN PATENT SPECIFICATION

(11) **EP 4 518 093 B1**
(45) Date of publication and mention of the grant of the patent: **09.09.2026**
(21) Application number: 24712394.6
(22) Date of filing: 17.01.2024
(51) Int. Cl.: H02J 7/34, H02J 7/40, H02J 7/50, H02J 7/00, H02H 7/18

(54) **POWER SUPPLY MODULE AND POWER SUPPLY SYSTEM**
STROMVERSORGUNGSMODUL UND STROMVERSORGUNGSSYSTEM
MODULE D'ALIMENTATION ÉLECTRIQUE ET SYSTÈME D'ALIMENTATION ÉLECTRIQUE

(30) Priority: 06.07.2023 CN 202310825152
(43) Date of publication of application: 05.03.2025
(73) Proprietor: Shanghai Startorus Fusion Technology Company Limited, Shanghai 201808 (CN); Tsinghua University, Beijing 100084 (CN)
(72) Inventor: CHANG, Tingzhi, Beijing 100084 (CN); CHEN, Rui, Xi'an, Shaanxi 712000 (CN); WANG, Binbin, Beijing 100084 (CN); YANG, Menghua, Beijing 100084 (CN); TAN, Yi, Xi'an, Shaanxi 712000 (CN)
(74) Representative: Huang, Liwei
(86) International application number: PCT/CN2024/072886
(87) International publication number: WO 2025/007544

(56) References cited:
- EP-A1- 2 437 386
- CN-A- 110 460 153
- CN-A- 114 629 221
- CN-A- 114 844 074
- CN-A- 114 844 074
- CN-A- 116 317 487
- GB-A- 2 542 789
- US-A1- 2020 177 099
- US-A1- 2021 316 621

## Description

### TECHNICAL FIELD

The present disclosure relates to a power supply module and a power supply system for driving a magnet in a magnetic confinement fusion apparatus.

### BACKGROUND

A fusion apparatus such as a tokamak apparatus controls a plasma by a magnetic field, and the magnetic field is generated by passing a certain current into a magnetic field coil. Therefore, a high-power pulsed power supply is generally required to inject current into the magnetic field coil, that is, a magnet driving power supply. Usually, the magnet driving power supply requires to be able to reach megawatt (MW) or even a higher level of power in a short period of time. If such a power demand is directly introduced from a power grid, a load requirement on the power grid is higher. Therefore, a large-capacity energy storage element is generally used in the existing magnet driving power supply. The large-capacity energy storage element first acquires energy from the power grid and stores the energy, and then feeds the energy into the magnetic field coil for a short period of time.

In the existing magnet driving power supply, a flywheel generator is generally used to store energy. The flywheel generator can store a relatively large amount of energy. Moreover, the flywheel generator has high output power, meeting a power demand of various fusion apparatus such as the tokamak apparatus. However, a power supply system consisting of the flywheel generator is relatively complex and has poor versatility. Furthermore, if a malfunction occurs, the maintainability is poor.

Examples of a power supply module for a magnetic confinement fusion apparatus are disclosed in documents CN 114 844 074 A and US 2020/177099 A1. Document US 2021/316621 A1 discloses a converter system for a vehicle. Document GB 2 542 789 A relates to a fault protection and surge protection in modular voltage source converters.

Therefore, how to meet a power supply demand of the fusion apparatus while improving suitability and maintenance of the magnet driving power supply has become an urgent technical problem.

### SUMMARY

The present disclosure provides a power supply module and a power supply system used for driving a magnet in a magnetic confinement fusion apparatus. The power supply module and the power supply system may solve the technical problem of how to improve suitability and maintenance of a magnet driving power supply while meeting a power supply demand of a fusion apparatus in the related art.

According to a first aspect, according to the present invention, a power supply module is provided according to independent claim 1.

According to a second aspect, there is provided a power supply system. The power supply system includes: multiple power supply modules disclosed and a main controller. The multiple power supply modules are connected to the bus to supply power to the magnet. The main controller is in communication with a module controller of each of the power supply modules via a communication module of the power supply module, and the main controller is configured to receive state signals of the power supply modules and control an operation state of the power supply system based on the state signals.

In examples of the present disclosure, each power supply module may have a supercapacitor and a charging circuit that may charge the supercapacitor independently and a discharging circuit that may discharge the supercapacitor independently. Further, each power supply module may be provided with an independent signal acquisition module and a module controller. A state signal of the capacitor module can be obtained by the signal acquisition module. Moreover, independent control of the charging-discharging state of the capacitor module and independent monitoring of the capacitor module can be realized by the module controller. In this way, each power supply module can operate independently. Therefore, the power supply module in the present disclosure may be flexibly assembled according to a target electric quantity requirement and/or a target current requirement as a general module of the power supply system of the magnet in the magnetic confinement fusion apparatus. Then, a single power supply module may be maintained without affecting a normal operation of the power supply system of the magnet. In a case that the target electric quantity requirement and/or the target current requirement changes, the number of the power supply modules connected in series and/or in parallel is just required to be adaptively adjusted according to a new target electric quantity requirement and/or a new target current requirement. In this way, a strong versatility and a relatively simple maintenance can be achieved.

### BRIEF DESCRIPTION OF THE DRAWINGS

The drawings herein are included in the specification and form a part of the present specification, show embodiments that comply with the present disclosure, and are used together with the specification for explaining the principles of the present disclosure.

In order to describe technical solutions of the present disclosure or related arts more clearly, accompanying drawings required for describing examples or the related art are introduced briefly in the following.
FIG. 1 is a schematic diagram of an exemplary power supply module used for driving a magnet in a magnetic confinement fusion apparatus according to some examples of the present disclosure.
FIG. 2 is a schematic diagram of a circuit principle of an exemplary power supply module used for driving a magnet in a magnetic confinement fusion apparatus according to some examples of the present disclosure.
FIG. 3 is a schematic diagram of another exemplary power supply module used for driving a magnet in a magnetic confinement fusion apparatus according to some other examples of the present disclosure.
FIG. 4 is a schematic diagram of an exemplary power supply system according to some examples of the present disclosure.

### DETAILED DESCRIPTION OF THE EMBODIMENTS

In order to enable those ordinary skilled in the art to better understand the scheme of the present disclosure, the technical scheme in examples of the present disclosure will be clearly and completely described in combination with drawings of the present disclosure.

It should be noted that the terms "first", "second" and the like in the specification and claims and the drawings of the present disclosure are used for distinguishing similar objects, and not necessarily to describe a particular order or precedence. It should be understood that the data used in this way may be interchanged under appropriate circumstances so that the examples of the present disclosure described herein may be implemented in an order other than those illustrated or described herein. Furthermore, the terms "include/comprise" and "have" as well as any variants thereof, are intended to cover a non-exclusive inclusion, for example, containing a process, method, system, product or device of a series of steps or units which are not necessarily limited to the explicitly listed steps or units, but may include other steps or units not explicitly listed or inherent to such process, method, product or device.

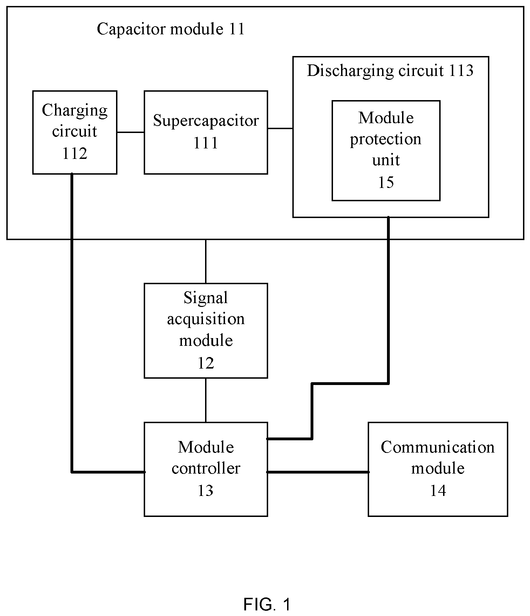

The present disclosure provides a power supply module. The power supply module provided is used for driving a magnet in a magnetic confinement fusion apparatus. In some examples of the present disclosure, the power supply module may adopt a modular design. Moreover, multiple power supply modules may be connected in series and/or in parallel with each other based on a target electric quantity requirement of the magnet, to form a power supply system used for driving the magnet, so as to power the magnet. FIG. 1 shows a structure of the power supply module according to some examples of the present disclosure. As shown in FIG. 1, the power supply module includes: a capacitor module 11, a signal acquisition module 12, a module controller 13 and a communication module 14.

The capacitor module 11 includes a supercapacitor 111, a charging circuit 112 and a discharging circuit 113. The charging circuit 112 may be connected with a charging power supply and is configured to charge the supercapacitor 111. The discharging circuit 113 may be connected with a magnet via a bus and is configured to discharge the magnet.

The signal acquisition module 12 is connected with the capacitor module 11 and is configured to acquire a state signal of the capacitor module 11.

The module controller 13 is connected with the capacitor module 11 and the signal acquisition module 12 and is configured to control a charging-discharging state of the capacitor module 11 and monitor the capacitor module 11 based on the state signal. In some examples, the module controller 13 may adopt Raspberry Pi or MCU.

The communication module 14 is connected with the module controller 13 and is configured to communicate with a module controller 13 in another power supply module or a main controller 20 in a power supply system.

As an exemplary example, the state signal may include at least one of a current signal, a voltage signal, a trigger feedback signal of the charging circuit 112 and/or the discharging circuit 113, a real-time temperature of the supercapacitor 111, and a real-time temperature of a power device in the charging circuit 112 and/or the discharging circuit 113, and a communication state signal of the communication module and the like.

In examples of the present disclosure, the current signal may refer to a charging current of the charging circuit 112 and/or a discharging current of the discharging circuit 113 in a charging state or a discharging state obtained by a current sensor. For example, a Hall current sensor shunt or an electromagnetic current transformer may be adopted as the current sensor. The voltage signal may refer to a voltage of the supercapacitor 111 obtained by a voltage sensor. For example, the voltage signal may be the voltage of the supercapacitor 111 in an idle state. In other examples, a current sensor may be adopted to obtain a current during a charging process or a discharging process, and then the voltage of the supercapacitor 111 may be calculated based on the current.

In some other examples of the present disclosure, the temperature signal may be obtained by a temperature sensor. The trigger feedback signal may be obtained by collecting a voltage or level change of a feedback circuit through the feedback circuit and a corresponding feedback terminal.

In a driving power supply of a magnet in some magnetic confinement fusion apparatus, there is a related technology of constructing a power supply system by adopting a capacitor energy storage mode. Specifically, a capacitor bank is formed by multiple capacitors in the form of an array as an energy storage element. Moreover, the capacitor bank is connected with an inverter to discharge a coil, where the inverter is configured to a switch and modulating a current waveform. However, conventional capacitor energy storages used as magnet driving power supplies are basically aluminum electrolytic capacitors. This kind of capacitor has a low energy density, resulting in a small energy storage of the power supply, making the discharging time be relatively short, and being unable to meet the requirements of continuous and slow discharge of the power supply during the discharging process of a fusion apparatus. Therefore, in the present disclosure, a supercapacitor with a higher energy density is adopted, to overcome the disadvantage of low energy storage of the electrolytic capacitor and discharge for a relative long time.

In some examples, a load of the magnetic confinement fusion apparatus may change in practice. Therefore, in order to accommodate more loads and to make the power supply system more scalable and reliable in a case of powering the magnetic confinement fusion apparatus, besides the supercapacitor 111, each power supply module may have the charging circuit 112 that charges the supercapacitor 111 independently and the discharging circuit 113 that discharges the supercapacitor 111 independently. Further, each power supply module may be provided with an independent signal acquisition module 12 and an independent module controller 13. The signal acquisition module 12 may be used to acquire the state signal of the capacitor module 11. The module controller 13 may be used to control a charging-discharging state of the capacitor module 11 and monitor the capacitor module. In this case, each power supply module can operate independently. Therefore, the power supply module in the present disclosure may be flexibly assembled according to a target voltage requirement and/or a target current requirement as a general module of the power supply system of the magnet in the magnetic confinement fusion apparatus. Moreover, a single power supply module may be maintained without affecting a normal operation of the power supply system of the magnet. In a case that the target voltage requirement and/or the target current requirement changes (i.e., the load changes), the number of the power supply modules connected in series and/or in parallel is just required to be adaptively adjusted according to a new target voltage requirement and/or a new target current requirement. In this way, a strong versatility and a relatively simple maintenance can be achieved.

In the present disclosure, the module controller 13 in each power supply module may be configured to collect the state signal of the current power supply module from the corresponding signal acquisition module 12, and communicate with the main controller 20 through the communication module 14, so that the power supply system constructed by the multiple power supply modules may be analyzed in real time and an automatic alarm can be realized. In this way, any problem can be found immediately and located accurately. Furthermore, since each power supply module may be triggered independently and the operation condition thereof may be monitored independently, each power supply module can provide feedbacks independently, which provides a possibility of using carrier phase shift technology to modulate a total current waveform. Furthermore, by the multiple power supply modules connected in parallel, a current ripple can be minimized with a very high equivalent switching frequency.

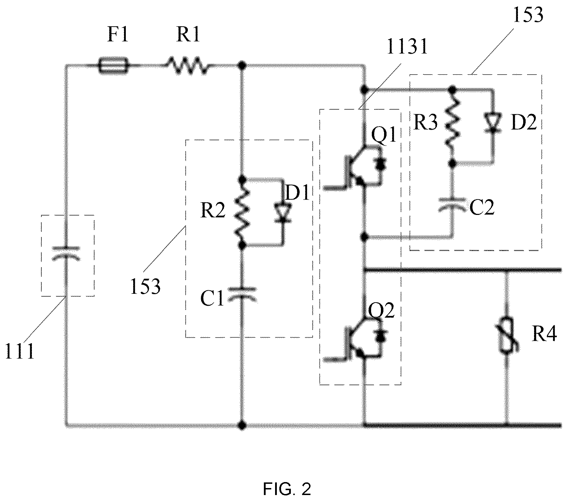

FIG. 2 is a schematic diagram of a circuit principle of an exemplary power supply module according to some examples of the present disclosure. As shown in FIG. 2, an operation principle of a power supply module can be described in detail with a diagram of a circuit principle of an exemplary power supply module.

The capacitor module 11 includes a supercapacitor 111, a charging circuit 112 and a discharging circuit 113. The discharging circuit 113 may include: a switching circuit 1131 and a driving unit 1132 of the switching circuit 1131. The switching circuit 1131 may include a first control switch Q1 and a freewheel element. The driving unit 1132 is connected with a control end of the first control switch Q1. The first control switch Q1 and the freewheel element are connected in series with the supercapacitor 111. Moreover, the freewheel element is connected with the magnet via the bus.

In some exemplary examples, the first control switch Q1 may adopt IGBT and MOS transistor. In order to ensure a voltage level and a switching rate of a controllable switching device such as a relay, IGBT may be taken as an example in the present disclosure.

A gate of the first control switch Q1 may be connected with the driving unit 1132 for opening and closing under a driving of the driving unit 1132. A collector of the first control switch Q1 may be connected with a positive electrode of the supercapacitor 111. An emitter of the first control switch Q1 may be connected with a positive electrode of the bus, and may be connected with a negative electrode of the freewheel element. Moreover, a positive electrode of the freewheel element may be connected with a negative electrode of the bus and a negative electrode of the supercapacitor 111.

Upon receiving a discharging instruction, the driving unit 1132 may control the first control switch Q1 to be turned on, so that the supercapacitor 111 may be connected to the bus and may be discharged to the magnet via the bus. Upon receiving a discharging stop instruction, the driving unit 1132 may control the first control switch Q1 to be turned off, so that the supercapacitor 111 may be not connected to the bus, and a freewheel circuit may be formed by the magnet, the bus and the freewheel element to discharge an electric quantity of the magnet.

In the present disclosure, the freewheel element may adopt a freewheel diode. A positive electrode of the freewheel diode may be connected with the negative electrode of the supercapacitor 111 and the negative electrode of the bus. A negative electrode of the freewheel diode may be connected with the emitter of the first control switch Q1 and the positive electrode of the bus. Moreover, the collector of the first control switch Q1 may be connected with the positive electrode of the supercapacitor 111.

In some examples, the freewheel element may further adopt IGBT. That is, a second control switch Q2 identical with the first control switch Q1 may be adopted. In this case, an emitter of the second control switch Q2 may be connected with the negative electrode of the supercapacitor 111 and the negative electrode of the bus. A collector of the second control switch Q2 may be connected with the emitter of the first control switch Q1 and the positive electrode of the bus. During the discharging process and the stop discharging process, the second control switch Q2 is always in an off state, and its diode connected in reverse parallel is used for performing freewheel.

As an exemplary example, each power supply module may be further provided with an independent charging circuit 112. The charging circuit 112 may include a third control switch. A control end of the third control switch may be connected with the module controller 13. A first end of the third control switch may be connected with a charging power supply, and a second end may be connected with the supercapacitor 111. In this example, the module controller 13 of each power supply module can control the charging circuit 112 to charge the supercapacitor 111 independently.

In the present example, the charging power supply may be a low-voltage direct current power supply which may be connected with an external power supply, for example, with a 220V/380V/110V alternating current power supply, to convert a voltage of the external power supply into a voltage that may charge the supercapacitor 111. In the present example, the charging power supply may include a rectifier circuit to convert an alternating current into a direct current voltage for charging the supercapacitor. In a case that the external power supply is a direct current power supply, the charging power supply may adopt a direct current voltage conversion circuit, for example, a BUCK converter, a BUOOST converter or a Buck-Boost converter.

In some examples, the charging power supply may also be reused as a power supply powering for the module controller 13, the driving unit 1132 and the like that require a low-voltage direct current power supply. In the present example, the external power supply may be converted to 15V and/or 24V direct current power supply to provide a low-voltage power supply required by the power supply module.

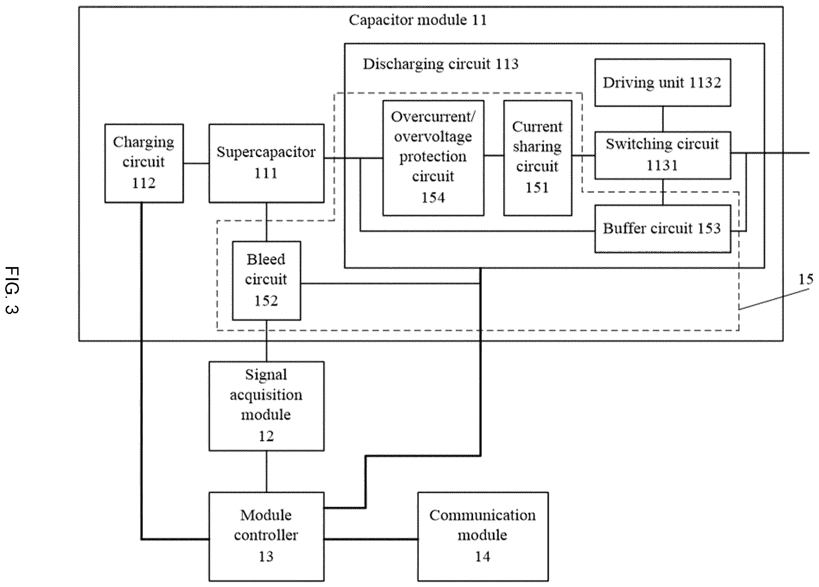

FIG. 3 shows a structure of the power supply module according to another example of the present disclosure. As an exemplary example, as shown in FIG. 2 and FIG. 3, each power supply module includes a module protection unit 15. This module protection unit 15 may be provided in the discharging circuit 113, and is configured to protect the power supply module.

In the present example, the module protection unit 15 can provide an independent protection function for the power supply module in an operation state or in a non-operation state, to disperse a risk of an overall power supply system to each single power supply module. In this way, even if the single power supply module has a malfunction, an influence of this power supply module on other power supply modules is relatively small since the single power supply module has the module protection unit 15 and can protect the power supply module independently. Moreover, since a voltage and current level of a single power supply module is relatively low, a violent energy caused by an accident can be reduced. In this way, the safety of the whole power supply system can be ensured.

To be noted, one supercapacitor 111 may have some differences with other supercapacitor 111. Moreover, in a case that multiple power supply modules construct a power supply system, the charging states, electric quantities and discharging states of different supercapacitors 111 in different power supply modules may be inconsistent. In this case, when the power supply system discharges, the discharging currents of different power supply modules may be inconsistent too.

The module protection unit 15 includes a current sharing circuit 151 provided in the discharging circuit 113, and is configured to perform a current sharing process on discharging currents of supercapacitors 111 respectively in power supply modules of the power supply system in a case that the power supply system has multiple power supply modules. In the present example, the current sharing module may share a discharging current of each power supply module in the power supply system to ensure current uniformity among the power supply modules connected in parallel.

In some examples, the current sharing circuit 151 may include a current sharing resistor R1, as shown in FIG. 2. This current sharing resistor R1 may be connected in series with the output end of the supercapacitor 111, that is, connected in series between the supercapacitor 111 and a drain of the first control switch Q1. If an output current of the present power supply module is relatively high, a voltage drop on the current sharing may increase, so as to reduce the output current. In this case, a purpose of current sharing can be achieved.

In other examples, the current sharing circuit 151 may include a dynamic current sharing circuit. The dynamic current sharing circuit may be connected with the signal acquisition module 12 or the module controller 13. The dynamic current sharing circuit may adjust the voltage drop output by the current power supply module in real time based on the current output by the current power supply module, then adjust the current output by the current power supply module based on a difference between the current actually output by the current power supply module and the theoretical output current. In this way, the output current would be identical with the theoretical output current, and the purpose of current sharing would be achieved.

In the present example, the dynamic current sharing circuit may reuse the first control switch, and adjust the discharging current of the power supply module dynamically according to a duty ratio of the first control switch. In the present example, after obtaining the real-time discharging current of the power supply module, the module controller may determine the duty ratio of the first control switch based on the real-time discharging current, and output a duty ratio control instruction to the driving unit, so that the driving unit may control the first control switch according to the corresponding duty ratio so as to dynamically adjust the discharging current in real time.

In other examples, the dynamic current sharing circuit may further include a fourth control switch connected in series in the discharging circuit. In this example, the module controller may determine a duty ratio of the fourth control switch based on the real-time discharging current after obtaining the real-time discharging current of the power supply module, so as to adjust the discharging current dynamically in real time.

The module protection unit 15 includes a bleed circuit 152. The bleed circuit is connected with the supercapacitor 111 and the module controller 13 and is configured to bleed an electric quantity of the supercapacitor 111 under triggering of the module controller 13.

For example, the bleed circuit 152 may include a bleed resistor and a bleed control unit. The bleed control unit may be connected with the module controller 13 for turning on or off the path between the bleed resistor and the supercapacitor 111 at the trigger of the module controller 13. In the present example, the bleed resistor may adopt a water-cooled resistor having sufficient heat dissipation capacity in a case of bleeding a remaining power in the supercapacitor 111.

After an operation of the power supply system, the module controller 13 controls a corresponding bleed control unit to conduct a path between a corresponding bleed resistance and the supercapacitor 111 to discharge a residual energy on the supercapacitor 111. In this case, each power supply module has independent charging and bleeding control capabilities, which may not only improve the bleeding efficiency but also reduce the heat concentration problem during energy bleeding. Therefore, each power supply module functions as a power supply with a complete and independent discharging capability.

As an exemplary example, in order to ensure that a remaining energy in the supercapacitor 111 may be safely and promptly bled once an accident occurs, multiple bleed circuits 152 may be provided for each power supply module.

As an exemplary example, the module protection unit 15 may further include: a buffer circuit 153, connected in parallel in the discharging circuit 113, and is configured to buffer a spike pulse generated in a case that the discharging circuit 113 is turned off. For example, the buffer circuit 153 may be connected in parallel between the supercapacitor 111 and the first control switch Q1. The buffer circuit 153 may include a first resistor R2, a first capacitor C1 and a first diode D1. One end of the first resistor R2 may be connected between a collector of the supercapacitor 111 and the first control switch Q1, while the other end may be connected with a positive electrode of the first capacitor C1. A negative electrode of the first capacitor C1 may be connected with a negative electrode of the supercapacitor 111 (the negative electrode of the bus). The first diode D1 may be connected in parallel with the first resistor R2. The negative electrode of the first diode D1 may be connected between the collector of the supercapacitor 111 and the collector of the first control switch Q1. The positive electrode of the first diode D1 may be connected with the positive electrode of the first capacitor C1.

Since the bus from the supercapacitor 111 to the first control switch Q1 has a relatively large distributed inductance, a relatively large peak voltage may be generated on the bus after the first control switch Q1 being turned off, which may cause an overvoltage damage to another element. In this example, the buffer circuit 153 is configured to prevent the generation of a peak voltage. In a case that the first control switch is turned off, the current may charge the first capacitor C1 by the first diode D1 rapidly, so that the voltage at both ends of the bus can be controlled by the first capacitor C1. Moreover, the first resistor R2 connected in parallel with the first diode D1 may consume the energy on the first capacitance C1, thereby preventing the circuit from oscillating.

As an exemplary example, the buffer circuit 153 may be connected in parallel between the collector and the emitter of the first control switch Q1. In this case, the buffer circuit 153 may include: a second resistor R3, a second diode D2 and a second capacitor C2. One end of the second resistor R3 may be connected with the collector of the first control switch Q1, and the other end of the second resistor R3 may be connected with a positive electrode of the second capacitor C2. A negative electrode of the second capacitor C2 may be connected with a collector of the first control switch Q1. A negative electrode of the second diode D2 may be connected with the collector of the first control switch Q1, and a positive electrode of the second diode D2 may be connected with the positive electrode of the second capacitor C2. In a case that the first control switch Q1 is turned off, a buffering principle for the spike pulse generated in the circuit is identical with the function of the buffer circuit 153 in the example described above, which will not be repeated in the present example.

The protection unit further includes an overcurrent/overvoltage protection circuit 154 provided in the discharging circuit 113 and configured to perform overcurrent/overvoltage protection on the discharging circuit. In the present example, the overcurrent/overvoltage protection circuit 154 may include a fuse F1 connected in series at the output end of the supercapacitor 111 as an overcurrent protection device. In a case that the output current is too large, the fuse F1 may be turned off, thus the discharging circuit 113 of the current power supply module may be cut off.

The overcurrent/overvoltage protection circuit 154 may further include: a varistor R4 connected in parallel at the output end of the power supply module. The varistor R4 can protect the supercapacitor 111 of the capacitor module 11 from overvoltage damaging in a case that the bus voltage is too high.

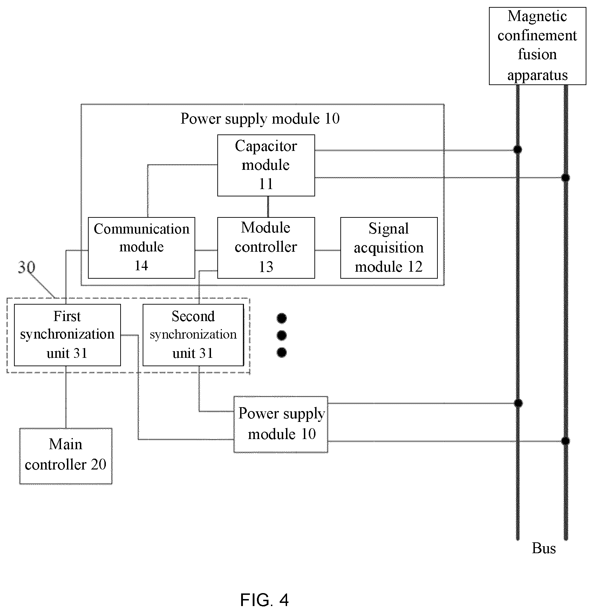

Based on the power supply module, examples of the present disclosure further provide a power supply system. FIG. 4 is a schematic diagram of the power supply system according to examples of the present disclosure. As shown in FIG. 4, the power supply system may be constructed by multiple power supply modules described in the above examples. Specifically, the power supply system may be formed by multiple power supply modules connected in series and/or in parallel with each other. In the present example, the multiple power supply modules may be connected in series and/or in parallel with each other on the bus.

As shown in FIG. 4, the power supply system may further include: a main controller 20, which is in communication with the module controller 13 of each of the power supply modules via a communication module of the power supply module. The main controller 20 may be configured to receive state signals of the power supply modules and control an operation state of the power supply system based on the state signals.

In the present example, each power supply module may have a self-contained power supply with independent unit voltage and unit current output capabilities. After determining a target current requirement and a target voltage requirement of the magnet, the number of power supply modules connected in parallel may be determined by calculating a multiple relationship between the target current and the unit current. That is, the number of the multiple branches connected in parallel may be determined by calculating a multiple relationship between the target voltage and the unit voltage.

For example, the output unit voltage of the supercapacitor 111 in each power supply module is 129 V, the output unit current is 1.2 KA, and the current required by the magnet in the magnetic confinement fusion apparatus is 110 KA. Therefore, 126 or more power supply modules should be connected in parallel to supply power to the magnet. Under a condition that an internal resistance of the magnet is R=0.93, and a self-inductance L=590uH, the power supply system can output a highest current Iₚₑₐₖ>110KA, and a discharging duration is t>1s, which corresponds to a field strength B_{T}>1T at a magnetic axis of the Tokamak.

Therefore, a target current requirement and a target voltage requirement of the magnet may be satisfied adaptively by connecting the multiple power supply modules in parallel and/or in series. The main controller 20 may communicate with the module controller 13 of each power supply module respectively. During the discharging process, the module controller 13 may obtain through its own signal acquisition module 12, a real-time current signal of a power supply module, a trigger state signal of the discharging circuit 113 and the like. These signals are uploaded to the main controller 20. Then, the main controller 20 monitors an operating state of each power supply module based on the operation state of each power supply module uploaded by each module controller 13. Before discharging or in an idle state, the module controller 13 uploads state information such as the voltage and the temperature of the supercapacitor 111, the temperature of a switching circuit, a driving power supply state of the switching circuit acquired by the signal acquisition module to the main controller 20. The main controller 20 analyzes the state of the whole power supply system in real time, and an automatic alarm can be realized. In this way, any problems can be found immediately and located accurately.

As an exemplary example, in order to ensure that an operation state of each power supply module is synchronized, the power supply system may further include a clock synchronization module 30, connected with the multiple power supply modules, and configured to synchronize operation clocks of the multiple power supply modules.

As an exemplary example, since the power supply system is constructed by connecting multiple power supply modules in parallel and/or in series, and the multiple power supply modules discharge the magnet as a whole, the discharging circuit 113 of each power supply module may be uniformly controlled by the main controller 20. For example, the main controller 20 may be connected to the discharging circuit 113 of the power supply module. The main controller 20 is configured to output a discharging instruction or a stop discharging instruction to the discharging circuit 113, so as to control the discharging circuit 113 to discharge or stop discharging. Specifically, the main controller 20 may be connected with the control end of the first control switch Q1 of the discharging circuit 113 respectively in each power supply module. In a case that discharging is required, the main controller 20 may output the discharging instruction, which controls the first control switches Q1 of all the power supply modules to be closed simultaneously. In this case, all the power supply modules would begin to discharge. In a case that discharging is required to be stopped, the main controller 20 may output the discharging stop instruction, which controls the first control switches Q1 of all the power supply modules to be turned off simultaneously to stop discharging.

In the present example, a first synchronization unit 31 may be provided between the main controller 20 and each power supply module to trigger the first control switches of all the power supply modules by a switch instruction simultaneously. The first synchronization unit 31 may synchronize the instruction to each power supply module after receiving the instruction sent by the main controller 20, so as to ensure that an operation action of each power supply module 10 is in a synchronous state.

In some examples, as shown in FIG. 4, the first synchronization unit 31 may include a multi-paralleled optical fiber trigger. An input end of this optical fiber trigger may be connected with a switch instruction output end of the main controller 20. The optical fiber trigger may output a switch instruction synchronously to control the switch of each power supply module to be in a synchronous state. In the present example, the optical fiber trigger can ensure that a switching delay is less than 1us, and a synchronization error between modules is less than 50ns, which may meet the demand of the multiple power supply modules discharging simultaneously in the power supply system.

In some other examples, in a case that the main controller 20 determines the state of each power supply module, the state information of each power supply module are required to be synchronized. Therefore, a second synchronization unit 32 may be further provided between each module controller 13. This second synchronization unit 32 may be connected with the module controllers 13 of the power supply modules, and is configured to synchronize clocks of the module controllers 13. As an exemplary example, the second synchronization unit 32 may synchronize the clocks of the remaining power supply modules by a Precision Timing Protocol (PTP), with the clock of one of the multiple power supply modules as a main clock.

In addition, the second synchronization unit 32 may further adopt a satellite clock synchronization system to synchronize the clock of each power supply module. In the present example, the second synchronization unit 32 may further adopt another clock synchronization mode, such as the Network Time Protocol (NTP) and Time-Sensitive Networking (Time-Sensitive Networking, TNS), to synchronize the clock in each power supply module.

As an exemplary example, before discharging, the main controller 20 may determine, based on the state signals, whether the supply modules are in a normal state to ensure that the power supply system can perform discharging normally. For example, the main controller 20 may detect the state of each power supply module respectively by collecting the state information of the power supply module uploaded by the module controller 13 of each power supply module. For example, the main controller 20 may detect the voltage and temperature of the supercapacitor 111 in each power supply module, the temperature of the first control switch Q1, and the power supply state of the driving unit of the first control switch Q1, and then determine whether the current power supply module has a discharging condition according to the state information of the power supply module. If the voltage of the supercapacitor 111 is less than the preset voltage value, the temperature of the supercapacitor 111 exceeds the first preset temperature value, the temperature of the first control switch Q1 exceeds the second preset temperature value, and a driving power supply state of the first control switch Q1 is not powered, it may lead to discharge failure. Therefore, the current power supply module may be prohibited from discharging.

In another example, before discharging, the main controller 20 may further detect whether the communication state between each module controller and the main controller 20 is normal, and whether a remote control between the discharging circuit 113 of each power supply module and the main controller 20 is in an online state. **In a** case that the communication state is normal and the remote control is in an online state, it is confirmed that discharging is possible. Moreover, in a case that the communication state is abnormal or the remote control is in a disconnection state, the corresponding power supply module would be prohibited from discharging.

Since the power supply system is constructed by multiple power supply modules, if the voltage of one or several power supply modules in the power supply system is relatively small, or the supercapacitor 111 is not charged, current backflow may occur during discharging. **In** another example, the main controller 20 may further determine whether a pressure difference between each power supply module is greater than a preset pressure difference threshold based on the state signal of the power supply module. **In** a case that the pressure difference is greater than the preset pressure difference threshold, a voltage of the corresponding power supply module is detected. Moreover, in a case that the voltage is less than a preset voltage, a corresponding power supply module is prohibited from discharging to prevent another power supply module from overcharging the current power supply module.

**In** order to reduce a shutdown frequency of the power supply system, in the present example, in a case that some power supply modules do not have a discharge condition, it may be determined whether the number of the power supply modules without the discharging condition is less than a preset number. **In** a case that the number is less than the preset number, it is confirmed that the discharging of the remaining power supply modules may meet the current and voltage requirement of the magnet, and therefore, the power supply module without the discharging condition may be shielded, and other power supply modules may discharge normally.

**In** the present example, the module controller of each power supply module may further control the first control switch Q1 in the discharging circuit 113 of the current power supply module individually. **If** the power supply module does not meet the discharging condition before discharging, and the number of the power supply modules without the discharging condition is less than the preset number, the main controller 20 sends an instruction to the module controller 13 to shield the corresponding power supply module from discharging, so that the module controller 13 may control the discharging circuit 113 and the charging circuit 112 to remain disconnected.

As an exemplary example, a fourth control switch may be connected in series between the discharging circuit 113 in the power supply module and the main controller 20, and a control end of the fourth control switch may be connected with the module controller 13. The module controller 13 may control the fourth control switch to cut off the connection between the discharging circuit 113 and the main controller 20 in a case that the module controller 13 receives a shielding instruction from the main controller 20, so that the main controller 20 may disable the control of the current power supply module, and so that the discharging instruction sent by the main controller 20 may not trigger the first control switch Q1 in the discharging circuit 113 of the current power supply module, and the first control switch Q1 may remain turned off. Under the condition that the power supply system meets the power requirement of the magnet, the current backflow of another module to the current power supply module may be prevented. Even if some power supply modules do not have the discharging condition, the power supply system may still supply power to the magnet. Further, the power supply system may further protect the power supply without the discharging condition from current backflow or overcurrent and overvoltage damaging.

Therefore, it may be seen that each power supply module has a supercapacitor, a charging circuit that may charge the supercapacitor independently and a discharging circuit that may discharge the supercapacitor independently. Each power supply module is further provided with an independent signal acquisition module and a module controller. By the signal acquisition module, a state signal of the capacitor module may be acquired. Further, independent control of the charging-discharging state of the capacitor module and independent monitoring of the capacitor module can be realized by the module controller. In this way, each power supply module can operate independently. Therefore, the power supply module in the present example may be assembled flexibly according to a target electric quantity requirement and/or a target current requirement as a general module of the power supply system of the magnet in the magnetic confinement fusion apparatus. Then, a single power supply module may be maintained without affecting a normal operation of the power supply system of the magnet. In a case that the target electric quantity requirement and/or the target current requirement changes, the number of the power supply modules connected in series and/or in parallel is just required to be adaptively adjusted according to a new target voltage requirement and/or a new target current requirement. In this way, a strong versatility and a relatively simple maintenance can be achieved.

Further, each power supply module includes a module protection unit.

The module protection unit has an independent protection function for the power supply module in an operation state or in a non-operation state to disperse a risk of an overall power supply system to a single power supply module. Even if a single power supply module has a malfunction, an influence of this power supply module on other power supply modules is relatively small since the single power supply module has the module protection unit and can protect itself independently,. Moreover, since a voltage and a current level of a single power supply module is relatively low, a violent energy caused by an accident can be reduced. In this way, the safety of the whole power supply system can be ensured.

Further, a current sharing circuit is provided in the discharging circuit. The current sharing circuit is configured to perform a current sharing process on discharging currents of supercapacitors in a case that the multiple power supply modules construct the power supply system. The current sharing module may share a discharging current of each power supply module in the power supply system to ensure a current uniformity among the power supply modules connected in parallel.

Further, the module protection unit includes a bleed circuit, connected with the supercapacitor and the module controller and configured to bleed an electric quantity of the supercapacitor under triggering of the module controller. After the power supply system finishing operating, the module controller controls a corresponding bleed control unit to conduct a path between a corresponding bleed resistance and the supercapacitor to discharge a residual energy on the supercapacitor. It may not only improve a bleeding efficiency, but also reduce a heat concentration problem during energy bleeding. Moreover, the single power supply module may have an independent charging-discharging control capability, so it may have a complete and independent discharging capability.

Further, a target current requirement and a target voltage requirement of the magnet may be satisfied adaptively by connecting multiple power supply modules in parallel and/or in series. During a discharging process, the module controller of each of the power supply modules may obtain through its own signal acquisition module, a real-time current signal of a current power supply module, a trigger state signal of the discharging circuit 113 and the like. These signals are uploaded to the main controller.

Then the main controller monitors an operating state of each power supply module based on the operation state of each power supply module uploaded by each module controller. Before discharging or in an idle state, the module controller uploads state information such as the voltage and the temperature of the supercapacitor, the temperature of a switching circuit, a driving power supply state of the switching circuit acquired by the signal acquisition module to the main controller. The main controller analyzes the state of the whole power supply system in real time, and an automatic alarm can be realized. In this way, any problem can be found immediately and located accurately.

Further, the discharging circuit of each power supply module may be uniformly controlled by the main controller. In order to trigger the first control switches of all the power supply modules by a switch instruction simultaneously, a first synchronization unit may be provided between the main controller and each power supply module. The first synchronization unit may synchronize the instruction to each power supply module after receiving the instruction sent by the main controller, so as to ensure that an operation action of each power supply module is in a synchronous state.

Further, a second synchronization unit may be further provided between each module controller. The second synchronization unit may be connected with the module controller, and is configured to synchronize clocks between the module controllers. By the second synchronization unit, a clock error between the module controllers may be ensured to be relatively small, so that the state signal uploaded by the module controller of each power supply module received by the main controller is synchronous.

## Claims

1. A power supply module for a magnetic confinement fusion apparatus, comprising:
a capacitor module (11), comprising a supercapacitor (111), a charging circuit (112) and a discharging circuit (113); wherein, the charging circuit is configured to be connected with a charging power supply and is configured to charge the supercapacitor, and the discharging circuit is configured to be connected with a magnet of the magnetic confinement fusion apparatus via a bus and is configured to discharge the magnet;
a signal acquisition module (12), connected with the capacitor module and configured to acquire a state signal of the capacitor module;
a module controller (13), connected with the capacitor module and the signal acquisition module and configured to control a charging-discharging state of the capacitor module and monitor the capacitor module based on the state signal; and
a communication module (14), connected with the module controller and configured to communicate with a module controller in another power supply module or a main controller (20) in a power supply system, wherein the power supply system is formed by a plurality of power supply modules and is configured to supply power to the magnet; and
a module protection unit (15), provided in the discharging circuit and configured to protect the power supply module,
**characterized in that**
the module protection unit comprises:
a current sharing circuit; wherein, the current sharing circuit comprises a control switch connected in series in the discharging circuit; the module controller is configured to determine
a duty ratio of the control switch based on a real-time discharging current after obtaining the real-time discharging current of the power supply module to adjust the real-time discharging current;
a bleeder circuit (152), connected with the supercapacitor and the module controller and configured to discharge, after an operation, a residual energy of the supercapacitor under triggering of the module controller; and
an overcurrent and overvoltage protection circuit (154), configured to perform an overcurrent and overvoltage protection on the discharging circuit.

2. The power supply module according to claim 1, wherein the discharging circuit comprises:
a first control switch (Q1), a second control switch (Q2) and a driving unit (1132);
the driving unit is connected with a control end of the first control switch;
the second control switch is connected in series with the first control switch, and a control end of the second control switch is connected with an output end of the driving unit;
the first control switch and the second control switch are connected in series across two ends of the supercapacitor; and
the second control switch is configured to be connected with the magnet via the bus.

3. The power supply module according to claim 2, wherein the module protection unit further comprises:
a buffer circuit, configured to buffer a spike pulse generated in a case that the discharging circuit is turned off; wherein,
the buffer circuit is connected in parallel between the supercapacitor and the first control switch;
the buffer circuit comprises:
a first resistor (R2), a first capacitor (C1) and a first diode (D1); one end of the first resistor is connected between a collector of the supercapacitor and the first control switch; the other end of the first resistor is connected with a positive electrode of the first capacitor; a negative electrode of the first capacitor is connected with a negative electrode of the supercapacitor; the first diode is connected in parallel with the first resistor; the negative electrode of the first diode is connected between the collector of the supercapacitor and the collector of the first control switch; and the positive electrode of the first diode is connected with the positive electrode of the first capacitor.

4. The power supply module according to claim 2, wherein the module protection unit further comprises:
a buffer circuit, configured to buffer a spike pulse generated in a case that the discharging circuit is turned off; wherein,
the buffer circuit is connected in parallel between a collector and an emitter of the first control switch;
the buffer circuit comprises: a second resistor (R3), a second diode (D2) and a second capacitor (C2); one end of the second resistor is connected with the collector of the first control switch; the other end of the second resistor is connected with a positive electrode of the second capacitor; a negative electrode of the second capacitor is connected with a collector of the first control switch; a negative electrode of the second diode is connected with the collector of the first control switch; and a positive electrode of the second diode is connected with the positive electrode of the second capacitor.

5. The power supply module according to claim 2, wherein the driving unit is configured such that,
upon receiving a discharging instruction, the driving unit controls the first control switch to be turned on, so that the supercapacitor is connected to the bus and is discharged to the magnet via the bus; and
upon receiving a discharging stop instruction, the driving unit controls the first control switch to be turned off, so that the supercapacitor is not connected to the bus, and a freewheel circuit is formed by the magnet, the bus and the second control switch (Q2) element to discharge an electric quantity of the magnet.

6. A power supply system, comprising:
a plurality of power supply modules according to any one of claims 1 to 5,
wherein the plurality of power supply modules are connected to the bus to supply power to the magnet; and
a main controller, which is in communication with the respective module controller of each of the power supply modules via a communication module of the power supply module, and the main controller is configured to receive state signals of the power supply modules and control an operation state of the power supply system based on the state signals.

7. The power supply system according to claim 6, further comprising:
a clock synchronization module (30), configured to be connected with the plurality of power supply modules, and configured to synchronize operation clocks of the plurality of power supply modules.

8. The power supply system according to claim 7, wherein
for each of the power supply modules, the main controller is connected with the discharging circuit of the power supply module and is configured to output a discharging instruction or a discharging stop instruction to the discharging circuit to control the discharging circuit to discharge or stop discharging; and
the clock synchronization module comprises a first synchronization unit (31) connected between the main controller and the discharging circuit, and the first synchronization unit is configured to synchronize the discharging instruction or the discharging stop instruction to the discharging circuit.

9. The power supply system according to claim 7, wherein
the clock synchronization module further comprises a second synchronization unit (32); and
the second synchronization unit is connected with module controllers of the power supply modules, and is configured to synchronize clocks of the module controllers.

10. The power supply system according to claim 6, wherein the main controller is further configured to:
determine, based on the state signals, whether the power supply modules are in a normal state before outputting a discharging instruction; and
output the discharging instruction in a case that the power supply modules are in the normal state.

11. The power supply system according to claim 10, wherein in a case that at least one of the power supply modules is in an abnormal state, the main controller or the module controller is configured to shield the power supply module in the abnormal state.

12. The power supply system according to claim 6, wherein the plurality of power supply modules are connected in series and/or in parallel with each other on the bus.

## Patentansprüche

1. Stromversorgungsmodul, umfassend:
ein Kondensatormodul (11), umfassend einen Superkondensator (111), eine Ladeschaltung (112) und eine Entladeschaltung (113); wobei die Ladeschaltung dazu konfiguriert ist, mit einer Ladeenergiequelle verbunden zu werden und den Superkondensator zu laden, und die Entladeschaltung dazu konfiguriert ist, über eine Sammelschiene mit einem Magneten in einer magnetischen Einschlussfusionsanlage verbunden zu werden und den Magneten zu entladen;
ein Signalerfassungsmodul (12), das dazu konfiguriert ist, mit dem Kondensatormodul verbunden zu werden und ein Zustandsignal des Kondensatormoduls zu erfassen;
eine Modulsteuerung (13), die dazu konfiguriert ist, mit dem Kondensatormodul und dem Signalerfassungsmodul verbunden zu werden und einen Lade-Entladezustand des Kondensatormoduls zu steuern und das Kondensatormodul basierend auf dem Zustandsignal zu überwachen; und
ein Kommunikationsmodul (14), das dazu konfiguriert ist, mit der Modulsteuerung verbunden zu werden und mit einer Modulsteuerung in einem anderen Stromversorgungsmodul oder einer Hauptsteuerung (20) in einem Stromversorgungssystem zu kommunizieren, wobei das Stromversorgungssystem aus einer Vielzahl von Stromversorgungsmodulen gebildet ist und dazu konfiguriert ist, den Magneten mit Energie zu versorgen; und
eine Modulschutzeinheit (15), die in der Entladeschaltung vorgesehen ist und dazu konfiguriert ist, das Stromversorgungsmodul zu schützen,
**dadurch gekennzeichnet, dass**
die Modulschutzeinheit umfasst:
eine Stromverteilungsschaltung; wobei die Stromverteilungsschaltung einen Steuerschalter umfasst, der dazu konfiguriert ist, in Reihe in der Entladeschaltung geschaltet zu werden; die Modulsteuerung bestimmt ein Tastverhältnis des Steuerschalters basierend auf einem Echtzeit-Entladestrom nach dem Erfassen des Echtzeit-Entladestroms des Stromversorgungsmoduls, um den Echtzeit-Entladestrom anzupassen;
eine Ableitschaltung (152), die dazu konfiguriert ist, mit dem Superkondensator und der Modulsteuerung verbunden zu werden und unter Auslösung durch die Modulsteuerung eine elektrische Ladungsmenge des Superkondensators zu entladen;
eine Überstrom-/Überspannungsschutzschaltung (154), die dazu konfiguriert ist, einen Überstrom-/Überspannungsschutz für die Entladeschaltung bereitzustellen.

2. Stromversorgungsmodul nach Anspruch 1, wobei die Entladeschaltung umfasst:
einen ersten Steuerschalter (Q1), einen zweiten Steuerschalter (Q2) und eine Treibereinheit (1132);
die Treibereinheit ist dazu konfiguriert, mit einem Steuereingang des ersten Steuerschalters verbunden zu werden;
der zweite Steuerschalter ist dazu konfiguriert, in Reihe mit dem ersten Steuerschalter geschaltet zu werden, und ein Steuereingang des zweiten Steuerschalters ist dazu konfiguriert, mit einem Ausgang der Treibereinheit verbunden zu werden;
der erste Steuerschalter und der zweite Steuerschalter sind dazu konfiguriert, in Reihe über zwei Enden des Superkondensators geschaltet zu werden; und
der zweite Steuerschalter ist dazu konfiguriert, über die Sammelschiene mit dem Magneten verbunden zu werden.

3. Stromversorgungsmodul nach Anspruch 2, wobei die Modulschutzeinheit ferner umfasst:
eine Pufferschaltung, die dazu konfiguriert ist, einen Spitzenimpuls zu puffern, der erzeugt wird, in einem Fall, dass die Entladeschaltung abgeschaltet wird; wobei
die Pufferschaltung dazu konfiguriert ist, parallel zwischen dem Superkondensator und dem ersten Steuerschalter geschaltet zu werden;
die Pufferschaltung umfasst:
einen ersten Widerstand (R2), einen ersten Kondensator (C1) und eine erste Diode (D1); ein Ende des ersten Widerstands ist dazu konfiguriert, zwischen einem Kollektor des Superkondensators und dem ersten Steuerschalter verbunden zu werden; das andere Ende des ersten Widerstands ist dazu konfiguriert, mit einer positiven Elektrode des ersten Kondensators verbunden zu werden; eine negative Elektrode des ersten Kondensators ist dazu konfiguriert, mit einer negativen Elektrode des Superkondensators verbunden zu werden; die erste Diode ist dazu konfiguriert, parallel zum ersten Widerstand geschaltet zu werden; eine negative Elektrode der ersten Diode ist dazu konfiguriert, zwischen dem Kollektor des Superkondensators und dem Kollektor des ersten Steuerschalters verbunden zu werden; und eine positive Elektrode der ersten Diode ist dazu konfiguriert, mit der positiven Elektrode des ersten Kondensators verbunden zu werden.

4. Stromversorgungsmodul nach Anspruch 2, wobei die Modulschutzeinheit ferner umfasst:
eine Pufferschaltung, die dazu konfiguriert ist, einen Spitzenimpuls zu puffern, der erzeugt wird, in einem Fall, dass die Entladeschaltung abgeschaltet wird;
wobei
die Pufferschaltung dazu konfiguriert ist, parallel zwischen einem Kollektor und einem Emitter des ersten Steuerschalters geschaltet zu werden;
die Pufferschaltung umfasst: einen zweiten Widerstand (R3), eine zweite Diode (D2) und einen zweiten Kondensator (C2); ein Ende des zweiten Widerstands ist dazu konfiguriert, mit dem Kollektor des ersten Steuerschalters verbunden zu werden; das andere Ende des zweiten Widerstands ist dazu konfiguriert, mit einer positiven Elektrode des zweiten Kondensators verbunden zu werden; eine negative Elektrode des zweiten Kondensators ist dazu konfiguriert, mit dem Kollektor des ersten Steuerschalters verbunden zu werden; eine negative Elektrode der zweiten Diode ist dazu konfiguriert, mit dem Kollektor des ersten Steuerschalters verbunden zu werden; und eine positive Elektrode der zweiten Diode ist dazu konfiguriert, mit der positiven Elektrode des zweiten Kondensators verbunden zu werden.

5. Stromversorgungsmodul nach Anspruch 2, wobei
beim Empfangen einer Entladeanweisung steuert die Treibereinheit den ersten Steuerschalter so, dass er eingeschaltet wird, sodass der Superkondensator dazu konfiguriert ist, mit der Sammelschiene verbunden zu werden und über die Sammelschiene an den Magneten zu entladen; und
beim Empfangen einer Entlade-Stoppanweisung steuert die Treibereinheit den ersten Steuerschalter so, dass er ausgeschaltet wird, sodass der Superkondensator nicht mit der Sammelschiene verbunden ist und ein Freilaufkreis durch den Magneten, die Sammelschiene und das Freilaufelement gebildet wird, um eine elektrische Ladungsmenge des Magneten zu entladen.

6. Stromversorgungssystem, umfassend:
eine Vielzahl von Stromversorgungsmodulen nach einem der Ansprüche 1 bis 5, wobei die Vielzahl von Stromversorgungsmodulen dazu konfiguriert ist, mit der Sammelschiene verbunden zu werden, um den Magneten mit Energie zu versorgen; und
eine Hauptsteuerung, die über ein Kommunikationsmodul des Stromversorgungsmoduls mit einer Modulsteuerung jedes der Stromversorgungsmodule in Kommunikation steht, wobei die Hauptsteuerung dazu konfiguriert ist, Zustandsignale der Stromversorgungsmodule zu empfangen und einen Betriebszustand des Stromversorgungssystems basierend auf den Zustandsignalen zu steuern.

7. Stromversorgungssystem nach Anspruch 6, ferner umfassend:
ein Taktsynchronisationsmodul (30), das dazu konfiguriert ist, mit der Vielzahl von Stromversorgungsmodulen verbunden zu werden und dazu konfiguriert ist, Betriebstakte der Vielzahl von Stromversorgungsmodulen zu synchronisieren.

8. Stromversorgungssystem nach Anspruch 7, wobei
für jedes der Stromversorgungsmodule die Hauptsteuerung dazu konfiguriert ist, mit der Entladeschaltung des Stromversorgungsmoduls verbunden zu werden und dazu konfiguriert ist, eine Entladeanweisung oder eine Entlade-Stoppanweisung an der Entladeschaltung auszugeben, um die Entladeschaltung zu steuern, zu entladen oder das Entladen zu stoppe; und
das Taktsynchronisationsmodul eine erste Synchronisationseinheit (31) umfasst, die dazu konfiguriert ist, zwischen der Hauptsteuerung und der Entladeschaltung verbunden zu werden, und die erste Synchronisationseinheit dazu konfiguriert ist, die Entladeanweisung oder die Entlade-Stoppanweisung mit der Entladeschaltung zu synchronisieren.

9. Stromversorgungssystem nach Anspruch 7, wobei
das Taktsynchronisationsmodul ferner eine zweite Synchronisationseinheit (32) umfasst; und
die zweite Synchronisationseinheit dazu konfiguriert ist, mit Modulsteuerungen der Stromversorgungsmodule verbunden zu werden und dazu konfiguriert ist, Takte der Modulsteuerungen zu synchronisieren.

10. Stromversorgungssystem nach Anspruch 6, wobei die Hauptsteuerung ferner dazu konfiguriert ist:
basierend auf den Zustandsignalen zu bestimmen, ob sich die Stromversorgungsmodule vor dem Ausgeben einer Entladeanweisung in einem normalen Zustand befinden; und
die Entladeanweisung auszugeben, in einem Fall, dass sich die Stromversorgungsmodule im normalen Zustand befinden.

11. Stromversorgungssystem nach Anspruch 10, wobei in einem Fall, dass sich mindestens eines der Stromversorgungsmodule in einem anormalen Zustand befindet, die Hauptsteuerung oder die Modulsteuerung das Stromversorgungsmodul im anormalen Zustand abschirmt.

12. Stromversorgungssystem nach Anspruch 6, wobei die Vielzahl von Stromversorgungsmodulen dazu konfiguriert ist, in Reihe und/oder parallel auf der Sammelschiene miteinander verbunden zu werden.

## Revendications

1. Module d'alimentation électrique, comprenant :
un module de condensateur (11), comprenant un supercondensateur (111), un circuit de charge (112) et un circuit de décharge (113) ; dans lequel, le circuit de charge est configuré pour être connecté à une source d'alimentation de charge et est configuré pour charger le supercondensateur, et le circuit de décharge est configuré pour être connecté à un aimant dans un dispositif de fusion par confinement magnétique via un bus et est configuré pour décharger l'aimant ;
un module d'acquisition de signal (12), configuré pour être connecté au module de condensateur et configuré pour l'acquisition d'un signal d'état du module de condensateur ;
un contrôleur de module (13), configuré pour être connecté avec le module de condensateur et le module d'acquisition de signal et configuré pour contrôler un état de charge-décharge du module de condensateur et surveiller le module de condensateur en fonction du signal d'état ; et
un module de communication (14), configuré pour être connecté au contrôleur de module et configuré pour communiquer avec un contrôleur de module dans un autre module d'alimentation ou un contrôleur principal (20) dans un système d'alimentation, dans lequel le système d'alimentation est constitué d'une pluralité de modules d'alimentation et est configuré pour alimenter l'aimant ; et
une unité de protection de module (15), fournie dans le circuit de décharge et configurée pour protéger le module d'alimentation,
**caractérisé en ce que**
l'unité de protection de module comprend :
un circuit de partage de courant, dans lequel, le circuit de partage de courant comprend un interrupteur de commande configuré pour être connecté en série dans le circuit de décharge ; le contrôleur de module détermine un rapport cyclique de l'interrupteur de commande en fonction d'un courant de décharge en temps réel après avoir obtenu le courant de décharge en temps réel du module d'alimentation pour ajuster le courant de décharge en temps réel ;
un circuit de purge (152), est configuré pour être connecté au supercondensateur et au contrôleur de module et configuré pour décharger une quantité électrique du supercondensateur sous le déclenchement du contrôleur de module ;
un circuit de protection contre les surintensités/surtensions (154), configuré pour effectuer une protection contre les surintensités/surtensions sur le circuit de décharge.

2. Module d'alimentation selon la revendication 1, dans lequel le circuit de décharge comprend :
un premier interrupteur de commande (Q1), un second interrupteur de commande (Q2) et une unité de conduite (1132) ;
l'unité de conduite est configurée pour être connectée à une extrémité de commande du premier interrupteur de commande ;
le deuxième interrupteur de commande est configuré pour être connecté en série avec le premier interrupteur de commande, et une extrémité de commande du deuxième interrupteur de commande est configurée pour être connectée à une extrémité de sortie de l'unité de conduite ;
le premier interrupteur de commande et le deuxième interrupteur de commande sont configurés pour être connectés en série aux deux extrémités du supercondensateur ; et
le deuxième interrupteur de commande est configuré pour être connecté à l'aimant via le bus.

3. Module d'alimentation selon la revendication 2, dans lequel l'unité de protection de module comprend en outre :
un circuit tampon, configuré pour mettre en mémoire tampon une impulsion de pic générée dans le cas où le circuit de décharge est éteint ; dans lequel,
le circuit tampon est configuré pour être connecté en parallèle entre le supercondensateur et le premier interrupteur de commande ;
le circuit tampon comprend :
un premier résistor (R2), un premier condensateur (C1) et une première diode (D1) ; dans lequel, une extrémité du premier résistor est configurée pour être connectée entre un collecteur du supercondensateur et le premier interrupteur de commande ; l'autre extrémité du premier résistor est configurée pour être connectée à une électrode positive du premier condensateur ; l'électrode négative du premier condensateur est configurée pour être connectée à une électrode négative du supercondensateur ; la première diode est configurée pour être connectée en parallèle avec le premier résistor ; l'électrode négative de la première diode est configurée pour être connectée entre le collecteur du supercondensateur et le collecteur du premier interrupteur de commande ; et l'électrode positive de la première diode est configurée pour être connectée à l'électrode positive du premier condensateur.

4. Module d'alimentation selon la revendication 2, dans lequel l'unité de protection de module comprend en outre :
un circuit tampon, configuré pour mettre en tampon une impulsion de pic générée dans le cas où le circuit de décharge est éteint ;
dans lequel,
le circuit tampon est configuré pour être connecté en parallèle entre un collecteur et un émetteur du premier interrupteur de commande ;
le circuit tampon comprend : un deuxième résistor (R3), une deuxième diode (D2) et un deuxième condensateur (C2) ; une extrémité du deuxième résistor est configurée pour être connectée au collecteur du premier interrupteur de commande ; l'autre extrémité du deuxième résistor est configurée pour être connectée à une électrode positive du deuxième condensateur ; une électrode négative du deuxième condensateur est configurée pour être connectée au collecteur du premier interrupteur de commande ; une électrode négative de la deuxième diode est configurée pour être connectée au collecteur du premier interrupteur de commande ; et une électrode positive de la deuxième diode est configurée pour être connectée à l'électrode positive du deuxième condensateur.

5. Module d'alimentation selon la revendication 2, dans lequel
à la réception d'une instruction de décharge, l'unité de conduite commande l'activation du premier interrupteur de commande, de sorte que le supercondensateur soit configuré pour être connecté au bus et se décharge vers l'aimant via le bus ; et
à la réception d'une instruction d'arrêt de décharge, l'unité de conduite commande l'ouverture du premier interrupteur de commande, de sorte que le supercondensateur ne soit pas connecté au bus, et un circuit de roue libre est formé par l'aimant, le bus et l'élément de roue libre pour décharger une quantité électrique de l'aimant.

6. Système d'alimentation, comprenant :
une pluralité de modules d'alimentation selon l'une des revendications 1 à 5, dans laquelle la pluralité de modules d'alimentation sont configurés pour être connectés au bus afin d'alimenter l'aimant ; et
un contrôleur principal, qui communique avec un contrôleur de module de chacun des modules d'alimentation via un module de communication du module d'alimentation, et le contrôleur principal est configuré pour recevoir des signaux d'état des modules d'alimentation et contrôler un état de fonctionnement du système d'alimentation en fonction des signaux d'état.

7. Système d'alimentation selon la revendication 6, comprenant en outre :
un module de synchronisation d'horloge (30), configuré pour être connecté à la pluralité de modules d'alimentation, et configuré pour synchroniser les horloges de fonctionnement de la pluralité de modules d'alimentation.

8. Système d'alimentation selon la revendication 7, dans lequel
pour chacun des modules d'alimentation, le contrôleur principal est configuré pour être connecté au circuit de décharge du module d'alimentation et est configuré pour émettre une instruction de décharge ou une instruction d'arrêt de décharge vers le circuit de décharge afin de commander la décharge ou l'arrêt de décharge du circuit de décharge ; et
le module de synchronisation de l'horloge comprend une première unité de synchronisation (31) configurée pour être connectée entre le contrôleur principal et le circuit de décharge, et la première unité de synchronisation est configurée pour synchroniser l'instruction de décharge ou l'instruction d'arrêt de décharge avec le circuit de décharge.

9. Système d'alimentation selon la revendication 7, dans lequel
le module de synchronisation de l'horloge comprend en outre une deuxième unité de synchronisation (32) ; et
la deuxième unité de synchronisation est configurée pour être connectée aux contrôleurs de module des modules d'alimentation, et est configurée pour synchroniser les horloges des contrôleurs de module.

10. Système d'alimentation selon la revendication 6, dans lequel le contrôleur principal est en outre configuré pour :
déterminer, sur la base des signaux d'état, si les modules d'alimentation sont dans un état normal avant d'émettre une instruction de décharge ; et
émettre l'instruction de décharge dans le cas où les modules d'alimentation sont dans l'état normal.

11. Système d'alimentation selon la revendication 10, dans lequel, dans le cas où au moins un des modules d'alimentation est dans un état anormal, le contrôleur principal ou le contrôleur du module met en veille le module d'alimentation dans l'état anormal.

12. Système d'alimentation selon la revendication 6, dans lequel la pluralité de modules d'alimentation sont configurés pour être connectés en série et/ou en parallèle les uns avec les autres sur le bus.
